# EUROPEAN PATENT APPLICATION

(11) **EP 2 285 060 A2**
(43) Date of publication of application: **16.02.2011**
(21) Application number: 10165719.5
(22) Date of filing: 11.06.2010
(51) Int. Cl.: H04L 29/06

(54) **Method and apparatus for providing environment for use of internet-based service**

(30) Priority: 11.08.2009 KR 20090073790
(71) Applicant: Electronics and Telecommunications Research Institute, Daejeon-si 305-700 (KR)
(72) Inventor: Yoon, Sung-Hyun, Daejeon-si (KR); LEE, Soon-Seok, Daejeon-si (KR); KIM, Young-Boo, Chungcheongnam-do (KR)
(74) Representative: Betten & Resch

(57) **Abstract**

An apparatus and method for improving the convenience and efficiency of use of the Internet and providing a fundamentally new environment for use of an Internet-based service through automation of authentication for Internet-based service are provided. The apparatus includes an authentication-authorization-accounting (AAA) agent which performs network access authentication such that a user terminal can access a network that the user terminal recognizes, and which performs user authentication required for using Internet-based services according to procedures in accordance with requirements predefined for a user's purpose, wherein the Internet-based services are provided over the Internet by a contents provider. Accordingly, it is possible to reduce costs to be spent on service preparation procedures which are not necessarily related to the actual use of services, and thus the convenience and efficiency of service can be improved.

## Description

### CROSS REFERENCE TO RELATED APPLICATION

This application claims the benefit under 35 U.S.C. § 119(a) of Korean Patent Application No. 10-2009-0073790, filed on August 11, 2009, the entire disclosure of which is incorporated herein by reference for all purposes.

### BACKGROUND

### 1. Field

The following description relates to an apparatus and method for enabling a more convenient and effective use of an Internet-based service by automating service preparation procedures.

### 2. Description of the Related Art

With the rapid progress of the Internet which is believed as one of the most important inventions in the 20th century, the Internet has been considered as a necessity to business and personal use. In addition, it is expected that the Internet will be continuously developed and thereby capable of providing most of information services such as broadcasting and communications, and will be evolving to a Ubiquitous environment which allows users to use desired services without limitation of time and location. Thus, the environment for use of the Internet services should be developed in a form that enables the users to use the services more easily. That is, the environment should provide user-oriented Internet services.

The Internet, which is called "the Sea of Information", takes an important role in various industry fields, and its service area has been gradually expanded. For using the internet, a user subscribes to an Internet access service, and accesses the Internet using an Internet-capable terminal. The user experiences various Internet-based services white accessing the internet and selects and subscribes to a service of interest. Then, the user is provided with the subscribed service.

The Internet access service may vary with the network service providers (NSPs) and network implementation technologies. Generally, a user is allowed to use the network access service provided by an NSP in return for the payment of a service charge set by the NSP.

Internet capable terminals capable of communications through a network interface, including a personal computer, a laptop, a mobile phone, and a set-top box, have an Internet protocol stack mounted thereon, thereby enabling to use an Internet protocol (IP)-based Internet service through the network interface. A user may possess various types of terminals depending on his/her interest, and access the Internet using the terminals.

Diverse Internet-based services provided over the Internet may include a portal service, a financial service, an education service, an administrative service, a trading service, and a community service. Providers who offer these services are referred to as contents providers (CP). A user subscribes to a service of interest provided by each CP and pays a predetermined amount of charge according to the schedule of service charges set by the CP.

Thus, a user may need to pay three types of service charges to use the Internet-based service: a network service use charge, a terminal use charge, and an Internet-based service use charge. This means that the user is required to satisfy at least three requirements for using the Internet-based service, and consequently, the three types of authentication are necessary as the means of satisfying the respective requirements.

Besides the authentication, the user needs to conduct additional procedures such as searching for services suitable to needs of the user and selecting an appropriate service. That is, the user must go through a series of preparatory procedures to meet the requirements for the authentication and the various additional requirements each time when using any of the Internet-based services. Such preparatory procedures may hinder the seamless provision and use of various services, and may have been great obstacles to the ubiquitous environment.

### SUMMARY

There are provided an apparatus and method for providing a user with an environment for use of an Internet-based service by preliminarily defining requirements for using the Internet-based service and automating preparatory procedures for use of the Internet-based service based on the defined requirements.

Thus, the apparatus and method may provide a prototype of a Ubiquitous environment in which seamless Internet-based services are provided through a variety of terminals without limitation of time and location.

Also, the apparatus and method automate preparatory procedures in stages, including authentication, for use of the Internet, and thus provide the convenience, and efficiency of an Internet-based service.

The apparatus and method preliminarily provide service automation procedures organized by a user, and thus can realize mobility and continuity without service disconnection.

Furthermore, defining and rendering of automated service procedures may provide an Internet use environment which can create a new Internet-based business model. Examples of the business models may include leasing of a mobile phone in real-time, manufacturing of the above apparatus, and providing of an environment for use of an Internet-based service customized to the user by use of the apparatus.

In one general aspect, there is provided an apparatus for providing an environment for use of an Internet-based service, the apparatus including: an authentication-authorization-accounting (AAA) agent which performs network access authentication such that a user terminal can access a network that the user terminal recognizes, and which performs user authentication required for using Internet-based services according to procedures in accordance with requirements predefined for a user's purpose, wherein the Internet-based services are provided over the Internet by a contents provider.

The AAA agent may perform terminal authentication, if necessary, with respect to a terminal selected from terminals detected by the apparatus or a terminal selected from terminals available in the network.

The AAA agent may issue an inquiry message to the user terminal to check whether authentication for the user terminal will proceed when no requirements are predefined for the user's purpose.

The apparatus may further include a service management unit which creates and stores pieces of service information for searching for and selecting the Internet-based services.

The apparatus may further include a service management unit which creates and stores service information by combining access path information and authentication information of each of the Internet-based services and network information for allowing the each Internet-based service to access.

The apparatus may further include a service control unit which provides service information currently available to a user terminal from among the stored pieces of service information and activates an Internet-based service which corresponds to the provided service information according to the user's purpose.

The apparatus may further include a device management unit which includes a terminal interface for communicating with the user terminal, identifying a status of the user terminal and controlling terminal authentication and network access, and a terminal manager for providing information of a terminal which can be authenticated from among terminals detected by the apparatus and offering the Internet-based services available to the terminal whose information is provided.

The apparatus may further include an information management unit which stores service subscription information of network services and Internet-based services which the user has subscribed to and personal information including user preference with respect to the Internet-based services and the order of access, and provides the service subscription information and the personal information to the service management unit so as to create the service information.

The apparatus may further include an identifier which enables the user to be identified when authentications of the user terminal, the network service, and the Internet-based service are performed.

When a single user terminal uses a plurality of apparatuses for providing an environment for use of an Internet-based service, the identifier may distinguish elements included in one apparatus from those included other apparatuses.

The apparatus may be included in the user terminal or connected to the user terminal through a wired/wireless interface.

The apparatus may be connected to a plurality of user terminals to form a network and provide a terminal or an Internet-based service which a user desires to use.

According to another aspect, there is provided an apparatus for providing an environment for use of an Internet-based service, the apparatus including: an authentication-authorization-accounting (AAA) agent which performs network access authentication such that a user terminal can access a network that the user terminal recognizes, and which performs user authentication required for using Internet-based services according to procedures in accordance with requirements predefined for a user's purpose, wherein the Internet-based services are provided over the Internet by a contents provider; a service management unit which creates and stores pieces of service information for searching for and selecting the Internet-based services; a service control unit which provides service information currently available to a user terminal from among the stored pieces of service information and activates an Internet-based service which corresponds to the provided service information according to the user's purpose; a device management unit which includes a terminal interface for communicating with the user terminal, identifying a status of the user terminal and controlling terminal authentication and network access, and a terminal manager for providing information of a terminal which can be authenticated from among terminals detected by the apparatus and offering the Internet-based services available to the terminal whose information is provided; an information management unit which stores service subscription information of network services and Internet-based services which the user has subscribed to and personal information including user preference with respect to the Internet-based services and the order of access, and provides the service subscription information and the personal information to the service management unit so as to create the service information; and an identifier which enables the user to be identified when authentications of the user terminal, the network service, and the Internet-based service are performed.

According to still another aspect, there is provided a method of allowing a user terminal to use an Internet-based service by connecting the user terminal to a network service and the Internet-based service, the method including: performing network access authentication such that the user terminal can access a network that the user terminal recognizes, and performing user authentication required for using Internet-based services according to procedures in accordance with requirements predefined for a user's purpose, wherein the Internet-based services are provided over the Internet by a contents provider; creating and storing pieces of service information for searching for and selecting the Internet-based services; and providing service information currently available to a user terminal from among the stored pieces of service information and activating an Internet-based service which corresponds to the provided service information according to the user's purpose.

Other features will become apparent to those skilled in the art from the following detailed description, which, taken in conjunction with the attached drawings, discloses exemplary embodiments of the invention.

### BRIEF DESCRIPTION OF THE DRAWINGS

Fig. 1 illustrates a general Internet-based service configuration.
FIG. 2 is a flowchart illustrating general procedures for use of an Internet-based service.
FIG. 3 illustrates a conceptual diagram of an example of an environment for use of an Internet-based service.
FIG. 4 illustrates an example of an apparatus for providing an environment for use of an internet-based service.
FIG. 5 illustrates a flowchart of an example of a method of providing an environment for use of an Internet-based service.

Elements, features, and structures are denoted by the same reference numerals throughout the drawings and the detailed description, and the size and proportions of some elements may be exaggerated in the drawings for clarity and convenience.

### DETAILED DESCRIPTION

The following detailed description is provided to assist the reader in gaining a comprehensive understanding of the methods, apparatuses and/or systems described herein. Various changes, modifications, and equivalents of the systems, apparatuses and/or methods described herein will suggest themselves to those of ordinary skill in the art. Descriptions of well-known functions and structures are omitted to enhance clarity and conciseness.

An apparatus and method for providing an environment for use of an Internet-based service enables a terminal, a network, and a service to identify a user and automate service configuration according to predefined preliminary procedures, thereby providing the user with a customized service. Therefore, the procedures in accordance with requirements for use of a service will be processed according to automated processes without user intervention. To this end, an apparatus (alternatively, referred to as a self-organized service enabler) for providing an environment for use of an Internet-based service is provided and a method of implementing a service (alternatively referred to as a self-organized IP service) for providing an environment for use of the Internet-based service by utilizing the self-organized service enabler is provided.

Reference characters representing the primary elements in the description are as follows:
T: Terminal which is a general Internet protocol (IP) terminal
RG: Residential gateway which is premise equipment functioning as a gate for access to the Internet
AN: Access node which is a network access node or a node specific to regular subscriber network
AAA: Authentication authorization accounting which is a system for authentication process
IP: Internet protocol
CP: Contents provider which refers to a server operated by a digital contents provider to provide contents over an IF network and which is generally located in an Internet data center (IDC).

NSP: Network service provider which charges a predetermined amount of fee to companies or privates and offers a network access service or lends lines to other NSPs

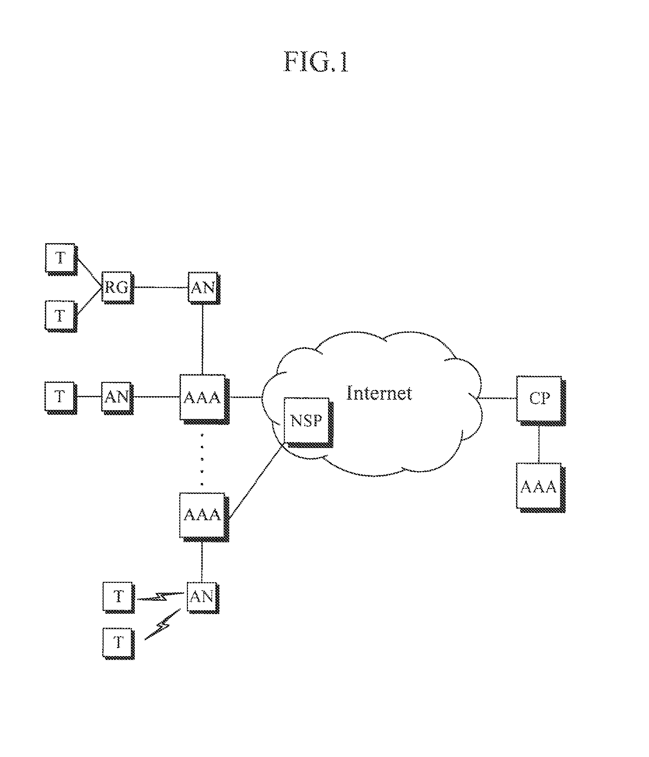

FIG. 1 illustrates a general Internet-based service configuration. Referring to FIG. 1, a user generally uses an Internet-based service via an IP capable terminal.

The user is equipped him/herself with a terminal by purchasing, leasing, or any other method. The terminal's method of access to the Internet varies with a network interface of the terminal in use and network configuration provided by an NSP. For example, a wired terminal may be connected to AN directly or via RG which is premise equipment, and a wireless terminal may be connected to AN through an air interface or via an intermediate node.

As such, the user can access the Internet through a variety of ways. In some cases, a single NSP operates a plurality of networks and provide the user with various access means. An NSP runs AAA as a way of authentication for identifying a subscriber, and authentication process is performed according to specific procedures defined by the NSP. In addition, the defined procedures determine types of information dealt by AAA and the location of the terminal in a network. An NSP may operate a plurality of networks with a single AAA.

A CP that provides an Internet-based service authenticates a subscriber with its own AAA and provides the service to the authenticated user. Additionally, the CP may provide an Internet-based service of various fields and operate AAA as a way of authentication for each service. Like the NSP, the CP may provide a plurality of Internet-based services, and may require individual authentication processes for the respective services according to policies defined by the CP, or provide a number of services through a single authentication process using such a technique as single sign on (SSO).

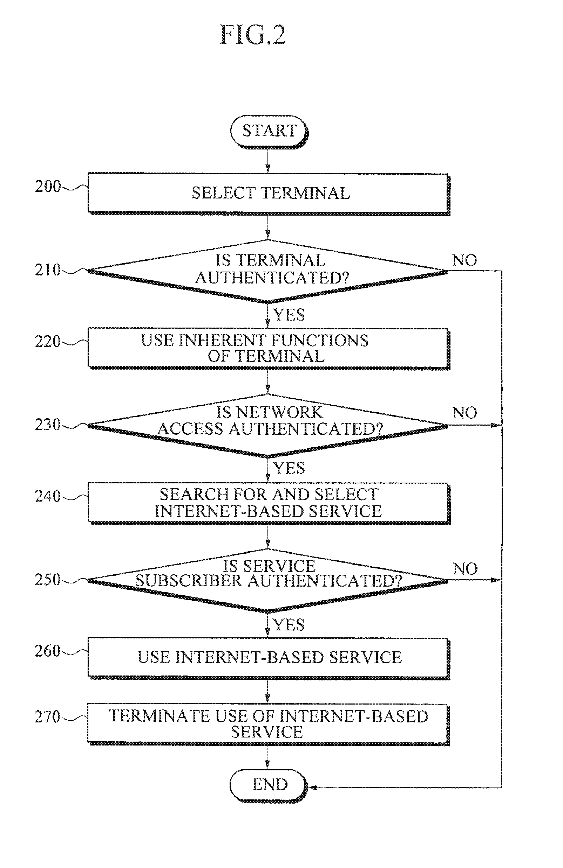

FIG. 2 is a flowchart illustrating general procedures for use of an internet-based service. Referring to FIG. 2, a user selects an Internet-capable terminal to use the Internet-based service at 200.

The terminal should be capable of communications through a network interface and processing the Internet protocol. Moreover, an application program for using an Internet-based service such as a web browser has been installed in the terminal or installation of such program is available on the terminal. In general, the usage of Internet-based services is affected by the types of terminals, and some services may be limited to use due to the types of the terminals.

In response to the selection of an Internet-capable terminal, authentication for the user to use the terminal is performed at 210. Generally, an authentication means for the terminal is provided by a terminal manufacturer or an operation system (OS) mounted on the terminal. Authentication is performed with respect to each terminal which the user desires to use.

When the terminal authentication is completed, the user is allowed to use unique functions of the terminal at 220. A multi-functional terminal which provides a variety of functions besides telecommunications can be used for various purposes. For example, a personal computer (PC), a ultra mobile PC (UMPC) and a personal digital assistance (PDA), which are the typical multi-functional terminals, provide various functions including documentation and games.

The user is required to have subscribed to a network access service to use the Internet-based service, and if the user has already subscribed to the relevant network access service, the user is allowed to access the Internet after authentication at 230. If there is no subscribed network access service, the user additionally needs to subscribe to the corresponding network access service. An authentication means for network access is provided by an NSP which offers the Internet-based service, and usually a specific authentication process in accordance with authentication policies of the NSP is provided.

Once the network access authentication is completed, the user searches for and selects services to be used from among various Internet-based services at 240. The Internet-based services in diverse fields including finance, education, and news, are offered via a variety of ways such as world wide web (WWW), video on demand, and television. Recent Internet-based services including an Internet portal service, which is one of the most representative Internet-based services, are provided in various forms, ranging in almost every field of interest. The user searches the Internet to find and select Internet-based services which satisfy the demand and interest of the user.

It is required that the user has subscribed to the selected service for use, and if the user has already subscribed, the user is allowed to use the service after completing an authentication process requested by the CP at 250. If the user has not subscribed to the service, the user needs to additionally perform subscription to the service.

Once the authentication for the selected Internet-based service is compacted, the user is enabled to use the Internet-based service at 260. If the user wants to use another service, additional authentication for the service is also required. Generally, a CP employs its own authentication, and the user completes authentication process for each service to use.

If the service that the user has been used is charged according to a measured rate schedule or a time-based rate schedule, authentication is required at the end of using the service at 270.

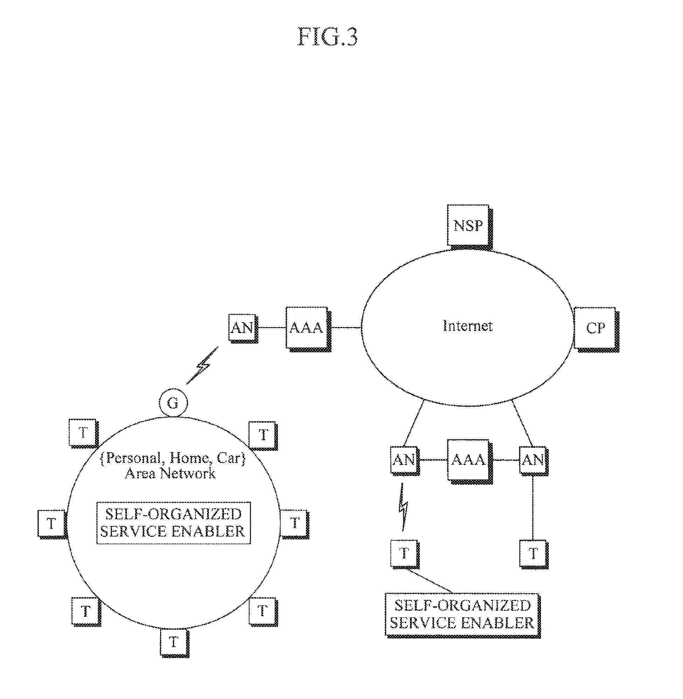

FIG. 3 illustrates a conceptual diagram of an example of an environment for use of an Internet-based service. Referring to FIG. 3, a self-organized IP service is implemented by an apparatus (hereinafter, referred to as a "self-organized service enabier") for providing the self-organized IP service. As described above, to use the Internet-based service, the user needs to satisfy different requirements including requirements for the three authentication processes and requirements for searching for and selecting the Internet-based service.

The self-organized service enabler stores such requirements and primary procedures for use the Internet-based service, stores procedures organized by a user and automatically processes the organized procedures for the user to use a corresponding Internet-based service. The user may apply different procedures to Internet-based services, or apply several procedures to one service.

The self-organized service enabler storing pre-settirigs according to the intention of the user may be used in various forms in different Internet environments. The Internet environment of the user is implemented by a variety of terminals, and generally by wired and wireless terminals. The self-organized service enabler may be included inside the terminal, or may be connected to the terminal via a wired or wireless interface. For example, the self-organized service enabler may be implemented as being included in a terminal as a universal subscriber identity module (USIM) or may be implemented utilizing a short range interface such as Bluetooth.

Along with the development of the Internet environment to the Ubiquitous environment, a user uses more diverse terminals and such terminals are connected to one another around the user to form a small network. The network changes as the user moves, and provides a service to the user through the most appropriate terminal according to the current condition of the user and the type of service to use. The self-organized service enabler is positioned in the center of the network, providing the user with an effective and convenient Internet environment.

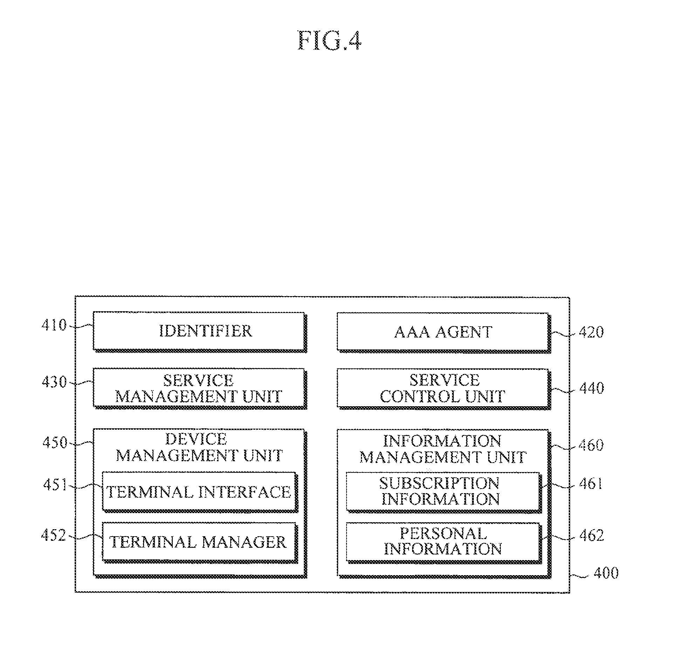

FIG. 4 illustrates an example of an apparatus 400 (hereinafter, referred to as "self-organized service enabler") for providing an environment for use of an Internet-based service. Referring to FIG. 4, the self-organized service enabler 400 includes an identifier 410, an AAA agent 420, a service management unit 430, a service control unitservice control unit440, a device management unit 450, and an information management unit 460.

The self-organized service enabler 400 has its own identifier 410. Different self-organized service enablers have different identifiers. The identifier enables a terminal and a service provider to recognize a user, and is used as identifier for the inner elements and functions of each self-organized service enabler 400. If the user uses a plurality of self-organized service enablers, identifiers of the respective self-organized service enablers distinguish elements of one self-organized service enabler from those of other self-organized service enablers.

The AAA agent 420 authenticates a user terminal and a service to which the user has subscribed. As described above, three authentication processes are required for the user to use the Internet-based service. The self-organized service enabler 400 processes authentications with respect to each procedure according to requirements preliminarily set for user's purpose.

In terminal authentication, upon recognizing a terminal around the user, the self-organized service enabler 400 performs authentication of the recognized terminal preliminarily. The user may previously determine whether or not the automatic authentication will be processed with respect to the terminal, and if no automatic authentication is set, the user may be asked whether he/she will proceed with the authentication process.

The automatic authentication may be performed on a network service and an Internet-based service. If a terminal recognizes a network, the terminal notifies it to the self-organized service enabler 400, and the self-organized service enabler 400 may direct the terminal to obtain network access authentication.

In addition, the self-organized service enabler 400 which detects the network access may instruct authentication with respect to a specific Internet-based service. The user may previously define automatic authentication processes with respect to frequently used terminals and services, and the self-organized service enabler 400 automatically performs authentication of the terminals and the services when recognizing them, thereby minimizing the user's intervention in the process of authentication.

The service management unit 430 defines procedures for searching for and selecting each service, and specifies requirements of each procedure.

In one example, the service management unit 430 may generate pieces of service information to use a specific Internet-based service. Service information may be created by combining access path information such as uniform resource locator (URL) and authentication information of the Internet-based service and information of the network to which access is allowed. Additionally, service information may be created by adding information of a terminal which is to use the Internet-hased service to the above information. Moreover, service information is generated by including inquiries to a user with respect to undefined requirements, thereby overcoming the uncertainty. The generated service information may be modified later or may be deleted if not necessary.

The service control unit440 selects and provides service information which is the most appropriate to the user's current condition, from among the pre-defined several pieces of service information. Then, the user is provided with a service according to the selected service information.

The device management unit 450 recognizes the user's terminal, and retains information of the terminal. In addition, the device management unit 450 includes a terminal interface 45 through which communicates with other terminals, identifies the status (e.g. performance and network access status) of each terminal and controls the terminals.

Moreover, the device management unit 450 includes a terminal manager 452 which obtains information of a currently available terminal and offers services available to the user.

The information management unit 460 retains service subscription information which is about network service and Internet-based services to which the user has subscribed. Furthermore, the information management unit 460 stores personal information 462 including user preference and the order of access, and provides the service information to the user based on the personal information 462.

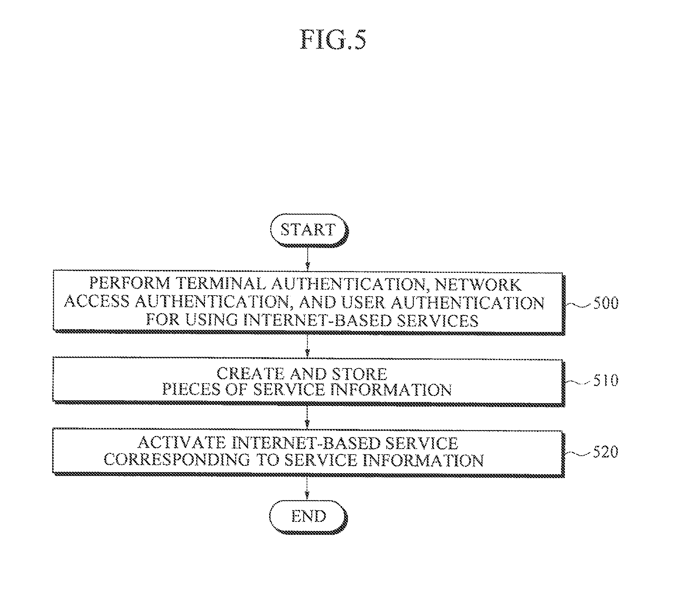

FIG. 5 illustrates a flowchart of an example of a method of providing an environment for use of an Internet-based service.

At 500, when terminal authentication is required for using a user terminal, terminal authentication is performed with respect to a terminal which the user desires to use or a terminal available in an accessible network, network access authentication is performed with respect to a network that the user terminal has recognized for allowing the user terminal to access the network, and user authentication for using Internet-based services provided over the internet by a contents provider is performed according to procedures in accordance with requirements predefined for the user's purpose.

Pieces of service information for searching for and selecting the provided Internet-based services are created and stored at 510, and service information about the currently available service is provided and an Internet-based service which corresponds to the service information is activated according to the user's purpose at 520.

As described above, the self-organized service enabler may be configured to include an interface to communicate with terminals and memory for managing various piece of information including service information defined by a user and service subscription information, and may be configured to include logic for processing the service information.

Additionally, due to the nature of functions, the self-organized service enabler may be configured to be of a form factor that is convenient to be carried with. In recent technologies, it is considered that a mobile phone which has a USIM card and employs a short range interface such as Bluetooth and ultra-wideband (UWB) is the most appropriate to implement the self-organized service enabler.

The methods and/or operations described above may be recorded, stored, or fixed in one or more computer-readable storage media that includes program instructions to be implemented by a computer to cause a processor to execute or perform the program instructions. The media may also include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (RDM), random access memory (RAM), flash memory, and the like. Examples of program instructions include machine code, such as produced by a compiler, and files containing higher level code that may be executed by the computer using an interpreter. The described hardware devices may be configured to act as one or more software modules in order to perform the operations and methods described above, or vice versa. In addition, a computer-readable storage medium may be distributed among computer systems connected through a network and computer-readable codes or program instructions may be stored and executed in a decentralized manner.

A number of exemplary embodiments have been described above. Nevef-theless, it will be understood that various modifications may be made. For example, suitable results may be achieved if the described techniques are performed in a different order and/or if components in a described system, architecture, device, or circuit are combined in a different manner and/or replaced or supplemented by other components or their equivalents, Accordingly, other implementations are within the scope of the following claims.

## Claims

1. An apparatus for providing an environment for use of an Internet-based service, the apparatus comprising:
an authentication-authorization-accounting (AAA) agent which performs network access authentication such that a user terminal can access a network that the user terminal recognizes, and which performs user authentication required for using Internet-based services according to procedures in accordance with requirements predefined for a user's purpose, wherein the Internet-based services are provided over the Internet by a contents provider.

2. The apparatus of claim 1, wherein the AAA agent performs terminal authentication, if necessary, with respect to a terminal selected from terminals detected by the apparatus or a terminal selected from terminals available in the network.

3. The apparatus of claim 1, wherein the AAA agent issues an inquiry message to the user terminal to check whether authentication for the user terminal will proceed when no requirements are predefined for the user's purpose.

4. The apparatus of claim 1, further comprising:
a service management unit which creates and stores pieces of service information for searching for and selecting the Internet-based services.

5. The apparatus of claim 1, further comprising:
a service management unit which creates and stores service information by combining access path information and authentication information of each of the Internet-based services and network information for allowing the each internet-based service to access.

6. The apparatus of claim 4, further comprising:
a service control unit which provides service information currently available to a user terminal from among the stored pieces of service information and activates an Internet-based service which corresponds to the provided service information according to the user's purpose.

7. The apparatus of claim 6, further comprising:
a device management unit which includes a terminal interface for communicating with the user terminal, identifying a status of the user terminal and controlling terminal authentication and network access, and a terminal manager for providing information of a terminal which can be authenticated from among terminals detected by the apparatus and offering the Internet-based services available to the terminal whose information is provided.

8. The apparatus of claim 6, further comprising:
an information management unit which stores service subscription information of network services and Internet-based services which the user has subscribed to and personal information including user preference with respect to the Internet-based services and the order of access, and provides the service subscription information and the personal information to the service management unit so as to create the service information.

9. The apparatus of claim 6, further comprising:
an identifier which enables the user to be identified when authentications of the user terminal, the network service, and the Internet-based service are performed.

10. The apparatus of claim 9, wherein when a single user terminal uses a plurality of apparatuses for providing an environment for use of an Internet-based service, the identifier distinguishes elements included in one apparatus from those included other apparatuses.

11. The apparatus of claim 6 included in the user terminal, or connected to the user terminal through a wired/wireless interface.

12. The apparatus of claim 6 connected to a plurality of user terminals to form a network and providing a terminal or an Internet-based service which a user desires to use.

13. An apparatus for providing an environment for use of an Internet-based service, the apparatus comprising:
an authentication-authorization-accounting (AAA) agent which performs network access authentication such that a user terminal can access a network that the user terminal recognizes, and which performs user authentication required for using Internet-based services according to procedures in accordance with requirements predefined for a user's purpose, wherein the Internet-based services are provided over the Internet by a contents provider;
a service management unit which creates and stores pieces of service information for searching for and selecting the Internet-based services; and
a service control unit which provides service information currently available to a user terminal from among the stored pieces of service information and activates an Internet-based service which corresponds to the provided service information according to the user's purpose.

14. A method of allowing a user terminal to use an Internet-based service by connecting the user terminal to a network service and the Internet-based service, the method comprising:
performing network access authentication such that the user terminal can access a network that the user terminal recognizes, and performing user authentication required for using Internet-based services according to procedures in accordance with requirements predefined for a user's purpose, wherein the Internet-based services are provided over the Internet by a contents provider;
creating and storing pieces of service information for searching for and selecting the Internet-based services; and
providing service information currently available to a user terminal from among the stored pieces of service information and activating an Internet-based service which corresponds to the provided service information according to the user's purpose.

15. The method of claim 14, further comprising:
performing terminal authentication, if necessary, with respect to a terminal selected from terminals to be used or a terminal selected from terminals available in the network.
